# EUROPÄISCHE PATENTSCHRIFT

(11) **EP 3 174 779 B1**
(45) Veröffentlichungstag und Bekanntmachung des Hinweises auf die Patenterteilung: **27.06.2018**
(21) Anmeldenummer: 16723652.0
(22) Anmeldetag: 31.03.2016
(51) Int. Cl.: B62D 53/06

(54) **SCHWERLAST-TRANSPORTFAHRZEUG MIT VARIABLER BREITE**
HEAVY LOAD TRANSPORT VEHICLE OF VARIABLE WIDTH
VÉHICULE DE TRANSPORT DE CHARGES LOURDES À LARGEUR VARIABLE

(30) Priorität: 08.04.2015 DE 102015004288; 08.04.2015 DE 202015002529 U
(43) Veröffentlichungstag der Anmeldung: 07.06.2017
(73) Patentinhaber: Scheuerle Fahrzeugfabrik GmbH, 74629 Pfedelbach (DE)
(72) Erfinder: NABECK, Sven, 74629 Pfedelbach (DE); HAUF, Reinhard, 74629 Pfedelbach (DE)
(74) Vertreter: Leitner, Waldemar
(86) Internationale Anmeldenummer: PCT/EP2016/000540
(87) Internationale Veröffentlichungsnummer: WO 2016/162115

(56) Entgegenhaltungen:
- WO-A1-2014/090407
- DE-A1- 1 917 582
- DE-A1-102012 024 247
- DE-U1- 29 922 183
- US-A- 5 451 135
- US-A1- 2010 052 279

## Beschreibung

Die Erfindung betrifft ein Schwerlast-Transportfahrzeug mit einer variablen Breite, mit einem Fahrgestell, welches zwei Fahrgestellteile aufweist, die jeweils eine Anzahl von hintereinander angeordneten Radanordnungen tragen, wobei die beiden Fahrgestellteile eine Transportplattform für die zu transportierende Schwerlast festlegen.

Ein derartiges Transportfahrzeug ist aus der WO 2014/090407 A1 der Anmelderin bekannt. Zum Transport von Lasten mit Überbreite bzw. Zurückfahrt ohne Last ist es von Vorteil, wenn die Breite und Spurweite des zum Transport verwendeten Fahrzeugs verändert werden kann. Außerdem gibt es - z. B. in einigen Bundesstaaten der USA - gesetzliche Bestimmungen für Transportfahrzeuge zum Transport von Lasten mit Übergewicht, durch welche die zulässige Last pro Achse in Abhängigkeit von der Spurweite des Fahrzeugs beschränkt wird, so dass eine veränderbare Spurweite von Vorteil ist, um die gesetzlichen Bestimmungen zu erfüllen und die maximal mögliche Achslast auszunutzen.

Bei dem aus der vorgenannten Druckschrift bekannten Transportfahrzeug ist zur Veränderung der Breite und der Spurweite vorgesehen, dass die beiden jeweils eine Anzahl von hintereinander angeordneten Radanordnungen tragenden Fahrgestellteile zur Veränderung der Breite des Transportfahrzeugs quer zur einer Längsmittelebene verstellbar sind. Hierzu müssen auch die Spurstangen der Radanordnungen verstellt werden.

Transportfahrzeuge mit einer Breite und Spurweite, die bei Bedarf verändert werden kann, sind außer der eingangs genannten Druckschrift beispielsweise auch aus der US-A-4,772,038, der US-A-5,118,245 oder der US-A-5,326,128 bekannt.

Die US-A-3,339,942 offenbart einen Tieflader mit variabler Spurweite, dessen Breite bei Leerfahrten reduziert werden kann. Der Tieflader weist zwei Paare von Starrachsen auf, wobei das vordere Achspaar über einen ersten Schwanenhals drehbar mit der Zugmaschine verbunden ist und das hintere Achspaar über einen zweiten Schwanenhals drehbar mit dem ersten Schwanenhals verbunden ist, um die Manövrierfähigkeit des Tiefladers zu verbessern.

Aus der US-A-4,221,398 ist ein Transportfahrzeug der eingangs genannten Art in Form eines Deichselanhängers und eines Tiefladers mit mehreren Lenkachsen bekannt, dessen Breite und Spurweite ebenfalls bei Bedarf vergrößert bzw. verkleinert werden können, indem zwei Fahrgestelle, die jeweils eine Reihe von Rad-Drehgestellen tragen, quer zur Fahrtrichtung bzw. zu einer vertikalen Längsmittelebene des Transportfahrzeugs auseinander bzw. zusammen bewegt werden.

Aus der US 3,810,660 A ist ein Faltkarren für einen landwirtschaftlichen Rechen bekannt. Der Karren weist ein zentrales dreieckiges Fahrgestell mit einer zwei Räder besitzenden Achse auf. An den beiden Seiten des Fahrgestells sind über jeweils ein Gelenk nach oben klappbare Rechen angeordnet, die an ihrem äußeren Ende jeweils ein Stützrad tragen. Durch die beschriebene Konstruktion wird erreicht, dass im Fahrbetrieb die beiden Rechen nach oben geklappt werden können, so dass die Breite des durch das Fahrgestell und die beiden Rechen ausgebildeten Gefährts reduzierbar ist.

Die US 4,772,038 A zeigt einen Anhänger, der ein mittleres Fahrgestellteil sowie zwei seitliche Fahrgestellteile besitzt. Zur Änderung der Breite des Anhängers können die beiden seitlichen Fahrgestellteile relativ zum mittleren Fahrgestellteil verschoben werden.

Ausgehend hiervon ist es Aufgabe der Erfindung, ein Transportfahrzeug der eingangs genannten Art derart weiterzubilden, dass insbesondere bei einer Leerfahrt eine geringere Breite des Transportfahrzeugs als im Lastfall erreicht wird.

Diese Aufgabe wird erfindungsgemäß dadurch gelöst, dass das Transportfahrzeug ein zwischen diesen beiden seitlichen Fahrgestellteilen angeordnetes, radloses mittleres Fahrgestellteil aufweist, und dass zumindest ein seitliches Fahrgestellteil um eine Schwenkachse, die in Längsrichtung des Transportfahrzeugs verläuft, gegenüber dem mittleren Fahrgestellteil verschwenkbar ist.

Vorteilhafte Weiterbildungen der Erfindung sind Gegenstand der Unteransprüche.

Durch die vorgenannten Maßnahmen wird in vorteilhafter Art und Weise ein Transportfahrzeug ausgebildet, welches sich dadurch auszeichnet, dass seine Breite in einfacher Art und Weise dadurch verringerbar ist, indem die beiden am mittleren Fahrgestellteil angelenkten seitlichen Fahrgestellteile um die jeweils in Längsrichtung des Transportfahrzeugs verschwenkbar sind, so dass durch ein Anheben des mittleren Fahrgestellteils die beiden seitlichen Fahrgestellteile - vorzugsweise nach unten - verschwenkt werden können. Das erfindungsgemäße Transportfahrzeug kann somit nach der Durchführung seiner Transportaufgabe in einfacher Art und Weise rücktransportiert werden, indem das zusammengeklappte Transportfahrzeug auf die Ladefläche eines Rückholfahrzeugs transportiert wird.

Eine vorteilhafte Weiterbildung der Erfindung sieht vor, dass mindestens ein seitliches Fahrgestellteil in seiner Breite veränderlich ausgebildet ist. Eine derartige Maßnahme besitzt den Vorteil, dass hierdurch die Breite und Spurweite des erfindungsgemäßen Transportfahrzeugs zum Transport einer schweren und/oder großvolumigen Last vergrößert werden kann. Nach der Durchführung der Transportaufgabe werden dann das oder die verbreiterten seitlichen Fahrgestellteile wieder zusammengeschoben und wie vorstehend beschrieben verschwenkt, so dass auch ein derartig konfiguriertes Transportfahrzeug leicht rücktransportierbar ist.

Eine weitere vorteilhafte Weiterbildung der Erfindung sieht vor, dass das Transportfahrzeug eine Anzahl von Abstützanordnungen aufweist, die an den seitlichen Fahrgestellteilen angeordnet sind, die von den seitlichen Fahrgestellteilen nach außen vorspringen und an ihrem äußeren Ende ein Roll- oder Gleitelement aufweisen. Eine derartige Maßnahme besitzt den Vorteil, dass hierdurch das Einklappen bzw. das Ausklappen der seitlichen Fahrgestellteile beim Übergang zwischen einer Transportkonfiguration des erfindungsgemäßen Transportfahrzeugs, bei der die seitlichen Fahrgestellteile ausgeklappt sind, in eine Rückholkonfiguration, bei der die seitlichen Fahrgestellteile eingeklappt sind, erleichtert wird, indem die seitlichen Fahrgestellteile während dieses Übergangs auf den Abstützanordnungen abrollen oder auf diesen gleiten.

Eine weitere vorteilhafte Weiterbildung der Erfindung sieht vor, dass mindestens eine Abstützanordnung mindestens zwei Abstützelemente aufweist, die jeweils von den seitlichen Fahrgestellteilen abstehen. Eine derartige Maßnahme besitzt den Vorteil, dass hierdurch eine verbesserte Abstützung der seitlichen Fahrgestellteile beim Ein- und Ausklappvorgang erzielbar ist.

Eine weitere vorteilhafte Weiterbildung der Erfindung sieht vor, dass die oder mindestens eine der Abstützanordnungen abnehmbar am Transportfahrzeug angeordnet sind. Dies besitzt den Vorteil, dass die Abstützanordnungen nur während des vorstehend beschriebenen Übergangs von der Transportkonfiguration in die Rückholkonfiguration am erfindungsgemäßen Transportfahrzeug vorgesehen sein müssen.

Weitere Einzelheiten und Vorteile der Erfindung sind den Ausführungsbeispielen zu entnehmen, die im Folgenden anhand der Figuren beschrieben werden. Es zeigen:
- Figur 1: eine isometrische Darstellung eines ersten Ausführungsbeispiels eines Transportfahrzeugs in seiner Transportkonfiguration,
- Figur 2: eine Frontansicht des ersten Ausführungsbeispiels der Figur 1,
- Figur 3: eine isometrische Darstellung des Transportfahrzeugs der Figur 1 in seiner Rückholkonfiguration,
- Figur 4: eine Frontansicht des ersten Ausführungsbeispiels der Figur 3,
- Figur 5: das erste Ausführungsbeispiel des Transportfahrzeugs in einer teilweise eingeklappten Stellung,
- Figuren: eine schematische Darstellung des Übergangs von der
- 6a bis 6d: Transportkonfiguration in die Rückholkonfiguration,
- Figur 7: ein Detail des ersten Ausführungsbeispiels,
- Figur 8: eine isometrische Darstellung eines zweiten Ausführungsbeispiels eines Transportfahrzeugs in seiner Transportkonfiguration,
- Figur 9: eine Frontansicht des zweiten Ausführungsbeispiels der Figur 8,
- Figur 10: eine isometrische Darstellung des zweiten Ausführungsbeispiels des Transportfahrzeugs in seiner Rückholkonfiguration,
- Figur 11: eine Frontansicht des zweiten Ausführungsbeispiels,
- Figur 12: das zweite Ausführungsbeispiel des Transportfahrzeugs in einer teilweise eingeklappten Stellung,
- Figuren: eine schematische Darstellung des Übergangs von der
- 13a bis 13d: Transportkonfiguration in die Rückholkonfiguration, und
- Figur 14: ein Detail des zweiten Ausführungsbeispiels.

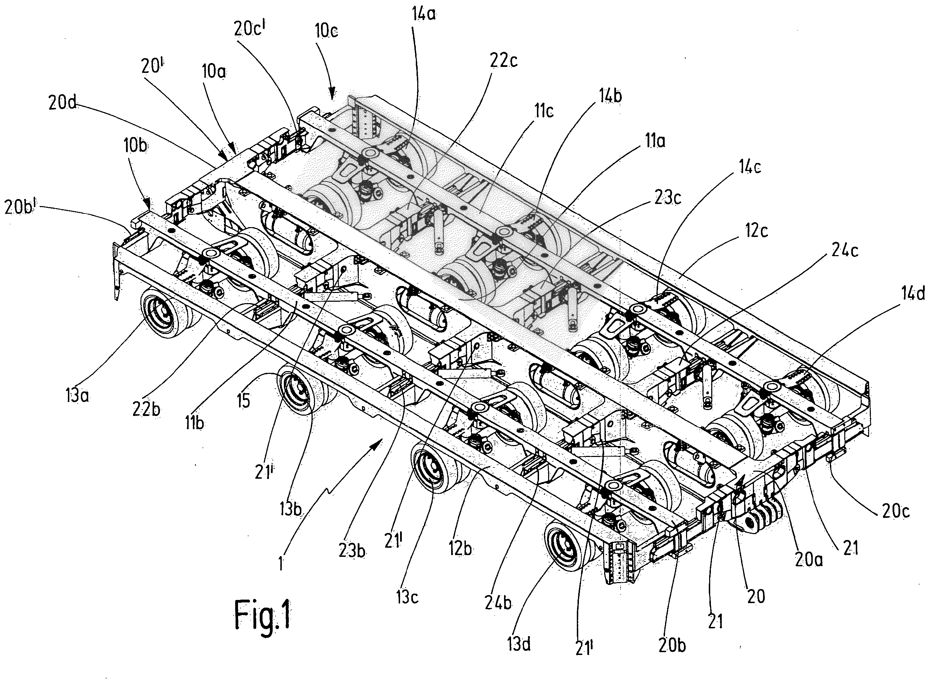

In den Figuren 1 bis 6 ist nun ein allgemein mit 1 bezeichnetes erstes Ausführungsbeispiel eines Transportfahrzeugs gezeigt. Das Transportfahrzeug 1 ist im beschriebenen Ausführungsbeispiel als ein Plattformanhänger ausgebildet, welcher von einem nicht dargestellten Zugfahrzeug gezogen wird. Es ist aber auch möglich, das Transportfahrzeug 1 der Figur 1 als selbstfahrendes Transportfahrzeug auszubilden. Dem Fachmann sind die daran vorzunehmenden Änderungen ohne weiteres ersichtlich, so dass diese nicht beschrieben werden müssen.

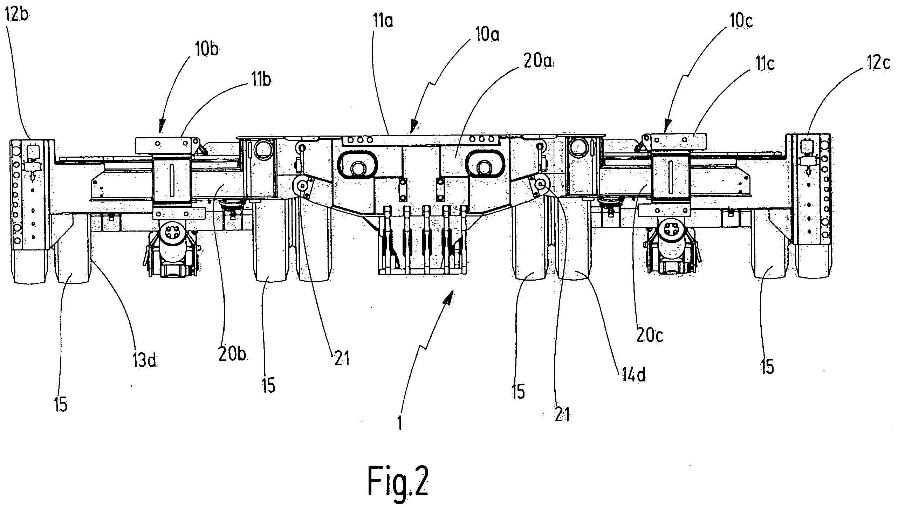

Das Transportfahrzeug 1 weist zumindest in seiner in den Figuren 1 und 2 gezeigten Transportkonfiguration eine Überbreite auf. Diese ermöglicht es, dass mit diesem Schwerlast-Transportfahrzeug überbreite Lasten, wie z. B. Maschinengehäuse, Transformatorengehäuse, Kuppeln von Windkraftanlagen, Turbinengehäuse und Turbinen oder dergleichen transportiert werden können. Dem Fachmann ist bekannt, dass es für das Verständnis der nachfolgenden Beschreibung des Transportfahrzeugs 1 nicht darauf ankommt, welche Last mit dem Transportfahrzeug 1 zu transportieren ist.

Nachdem mit dem Transportfahrzeug 1 die von ihm zu bewerkstelligende Transportaufgabe ausgeführt wurde, muss ein derartiges Transportfahrzeug 1 in der Regel zu seinem Ausgangspunkt oder seinem anderen Einsatzort gebracht werden. Überbreite Straßentransporte sind aber immer aufwendig, da hierfür aus Sicherheitsgründen erhebliche gesetzliche Auflagen zu erfüllen sind, z. B., dass ein gewisses Geschwindigkeitslimit einzuhalten ist, dass das Befahren öffentlicher Straßen mit einem derartigen überbreiten Transportfahrzeug nur zu gewissen Zeiten gestattet ist, dass ein überbreiter Straßentransport von Sicherungsfahrzeugen begleitet sein muss, etc. Bei einer Leerfahrt des Transportfahrzeugs 1 zu seinem Ausgangspunkt oder einem anderen Einsatzort trägt das Transportfahrzeug 1 aber keine Schwerlast mehr, so dass eine Rückführung desselben mit der zum Transport der Last erforderlichen Überbreite einen unnötigen Aufwand verursachen würde. Aus diesen Gründen wird, wie eingangs beschrieben, bei derartigen Transportfahrzeugen die Breite und/oder die Spurweite verringert. Bei den bekannten Transportfahrzeugen erfolgt die Rückholung des weiteren bis jetzt derart, dass das in seiner Breite und Spurweite reduzierte Transportfahrzeug auf eigenen Rädern von einem Zugfahrzeug zurückbefördert wird.

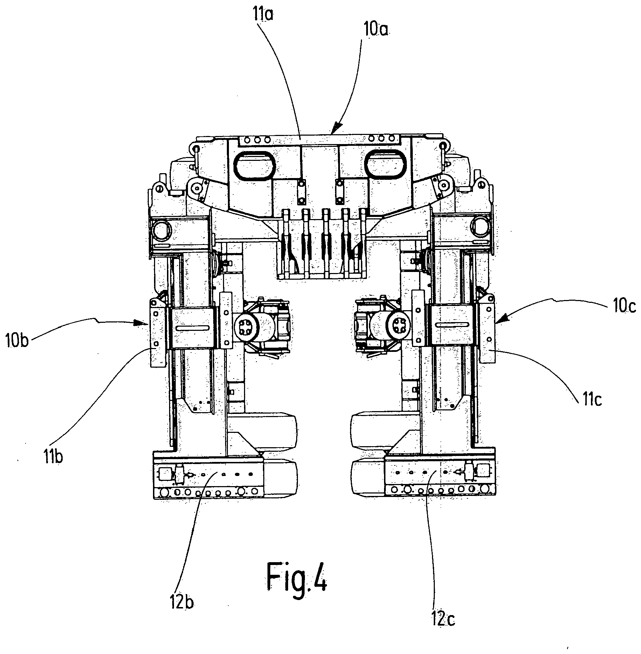

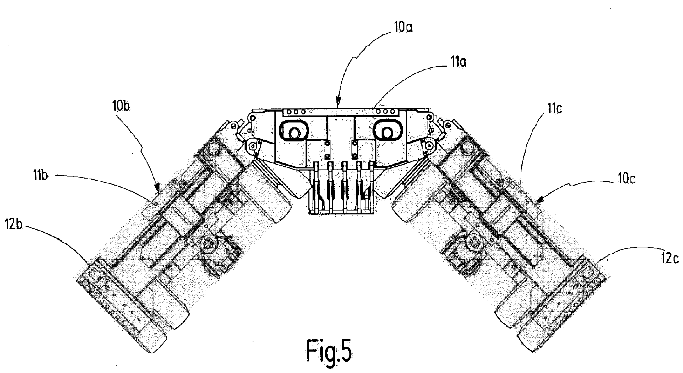

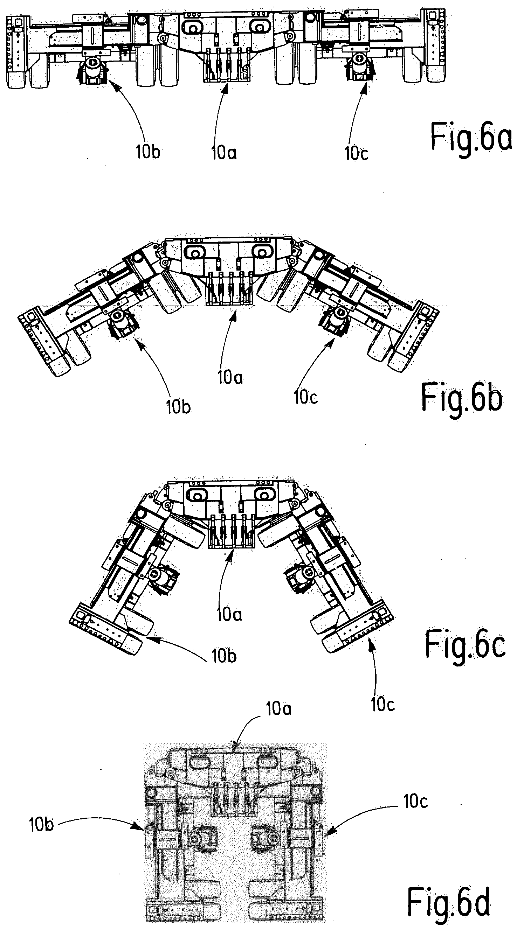

Um nun eine einfachere Rückholmöglichkeit zu schaffen, ist bei dem beschriebenen Transportfahrzeug 1 vorgesehen, dass das Fahrgestell 10 ein mittleres Fahrgestellteil 10a und zwei seitliche Fahrgestellteile 10b und 10c besitzt. Die beiden Fahrgestellteile 10b, 10c legen eine Transportplattform für die zu transportierende Schwerlast fest. Diese beiden seitlichen Fahrgestellteile 10b und 10c sind - wie in den Figuren 6a-6d dargestellt - relativ zum mittleren Fahrgestellteil 10a verschwenkbar. Hierdurch läßt sich einfach die Breite des Transportfahrzeugs 1 reduzieren und das Transportfahrzeug 1 kann - vorzugsweise auf einer Ladefläche eines Rückholfahrzeugs - leicht transportiert werden. Die Figuren 4 und 5 zeigen das Transportfahrzeug 1 in einer derartigen Rückholkonfiguration. Man erkennt, dass die beiden seitlichen Fahrgestellteile 10b und 10c in Bezug auf das mittlere Fahrgestellteil 10a nach unten geklappt sind, so dass ein kompakter Zustand des Transportfahrzeugs 1 ausgebildet wird. Es ist auch möglich, dass die beiden seitlichen Fahrgestellteile 10b und 10c in Bezug auf das mittlere Fahrgestellteil 10a nach oben geschwenkt werden. Im folgenden wird daher die weitere Beschreibung des Transportfahrzeugs 1 auf der Basis der erstgenannten Konfiguration - die beiden seitlichen Fahrgestellteile 10b und 10c sind relativ zum mittleren Fahrgestellteil 10a nach unten klappbar - durchgeführt. Dem Fachmann ist aber aus der nachfolgenden Beschreibung ersichtlich, welche Modifikationen er vorzunehmen hätte, wenn er die letztgenannte Konfiguration - die seitlichen Fahrgestellteile 10b und 10c sind nach oben geklappt - ausbilden möchte.

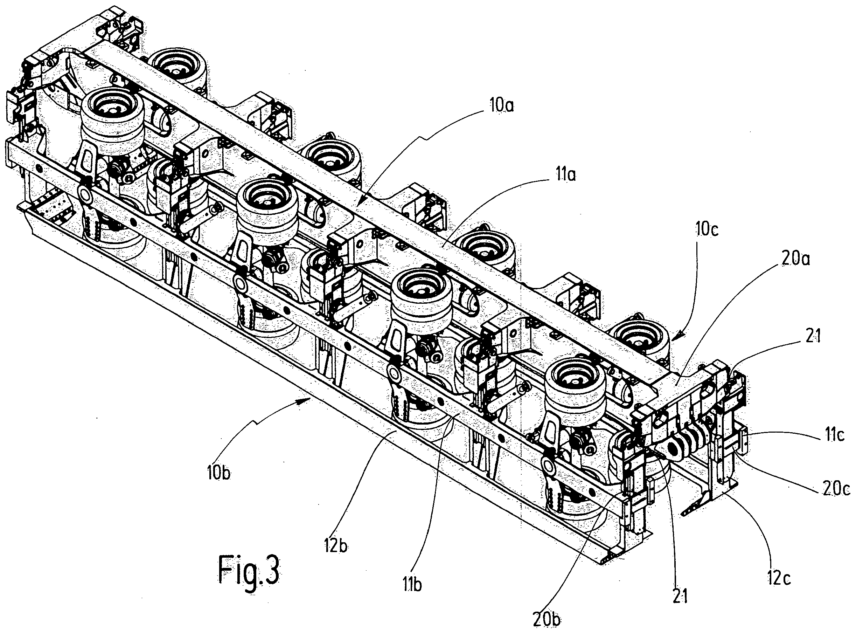

Wie insbesondere aus den Figuren 1 und 3 ersichtlich, weist das mittlere Fahrgestellteil 10a einen zentralen Längsträger 11a auf, an dessen vorderem und hinterem Ende jeweils ein Querträger 20 bzw. 20' angeordnet ist.

Jedes der beiden seitlichen Fahrgestellteile 10b und 10c weist jeweils einen seitlichen Längsträger 11b bzw. 11c auf. Vorzugsweise ist vorgesehen, dass jedes der seitlichen Fahrgestellteile 10b, 10c des Transportfahrzeugs 1 noch jeweils einen äußeren Längsträger 12b und 12c aufweist, welche die äußere Begrenzung der beiden seitlichen Fahrgestellteile 10b und 10c bilden. Die Verwendung derartiger äußerer Längsträger 12b und 12c besitzt des weiteren den Vorteil, dass hierdurch - wie am besten aus Figur 6d ersichtlich ist - eine Abstützung für das zusammengeklappte Transportfahrzeug 1 ausgebildet wird, welche es in einfacher Art und Weise erlaubt, das zusammengeklappte Transportfahrzeug 1 auf einer Ladefläche des Rückholfahrzeugs zu transportieren.

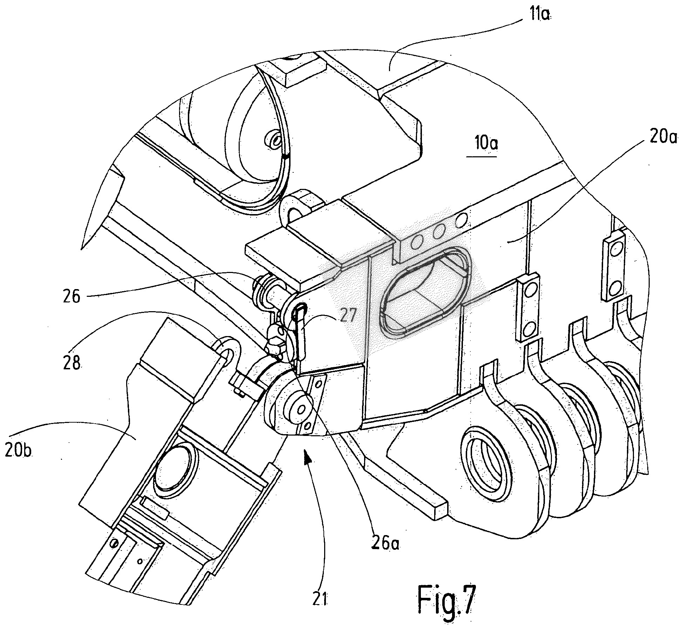

Der erste Querträger 20 weist - genauso wie der zweite Querträger 20' - ein mittleres Querträgersegment 20a auf, welches mit dem zentralen Längsträger 11a des mittleren Fahrgestellteils 10a verbunden ist. Mit dem zentralen Querträgersegment 20a bzw. 20a' sind jeweils zwei seitliche Querträgersegmente 20b und 20c bzw. 20b' und 20c' über jeweils ein Gelenk 21 verbunden, welches in Figur 7 dargestellt ist. Der erste seitliche Längsträger 11b und der erste äußere Längsträger 12b des ersten seitlichen Fahrgestellteils 10b sind mit den ersten seitlichen Querträgersegmenten 20b und 20c' verbunden, der zweite seitliche Längsträger 11c und der zweite äußere Längsträger 12c ihrerseits jeweils mit den zweiten seitlichen Querträgersegment 20b und 20c' der Querträger 20 und 20'. Durch die Verbindung der vorgenannten Bauteile wird eine stabile Transportfläche des Transportfahrzeugs 1 definiert.

Auf beiden Seiten des zentralen Längsträgers 11a ist jeweils eine entsprechende Anzahl von weiteren Querträgern, im hier gezeigten Ausführungsbeispiel von jeweils drei Querträgern 22b-24b und 22c-24c angeordnet, wobei korrespondierende Querträger vorzugsweise miteinander fluchten. Die weiteren Querträger 22b-24b bzw. 22c-24c verbinden jeweils den zentralen Längsträger 11a mit den seitlichen Längsträgern 11b bzw. 11c sowie den äußeren Längsträgern 12b bzw. 12c.

Jeder weitere Querträger 22b-24b sowie 22c-24c weist ebenfalls ein Gelenk 21' auf, über welches er mit dem mittleren Fahrgestellteil 10a und - wie hier dargestellt - insbesondere mit dem Längsträger 11a dieses mittleren Fahrgestellteils 10a schwenkbar verbunden ist. Das erste seitliche Fahrgestellteil 10b und/oder das zweite seitliche Fahrgestellteil 10c können somit an die durch die jeweiligen Gelenke 21 der Querträger 20 und 20' sowie der Gelenke 21' der weiteren Querträger 22b-24b sowie 22c-24c definierten Schwenkachsen verschwenkt werden, wie dies in den Figuren 6a-6d dargestellt ist.

Dies erlaubt es, die seitlichen Fahrgestellteile 10b, 10c von ihrer in den Figuren 1 und 2 dargestellten Transportkonfiguration, in der das Transportfahrzeug 1 die durch die Längsträger 11a, 11b, 11c sowie die äußeren Längsträger 12b und 12c ausgebildete Plattform aufweist, in die in den Figuren 3 und 4 gezeigte Konfiguration zu bewegen, in der die Breite des Transportfahrzeugs 1 deutlich reduziert ist. Es kann somit auf das seiner Rückholung dienenden Rücktransportfahrzeug aufgeladen und mit diesem zu seinem Ausgangsort oder zu seinem nächsten Einsatzort transportiert werden. Dieser Transport des beschriebenen Transportfahrzeugs 1 im Huckepack-Verfahren, bei dem das Transportfahrzeug 1 als Last des Rückholfahrzeugs transportiert wird, besitzt den Vorteil, dass in diesem Fall bei einem Straßentransport dann nicht mehr die strengeren gesetzlichen Auflagen für überbreite Straßentransporte, sondern die gesetzlichen Vorschriften für den Lasttransport des Rückholfahrzeugs gelten.

Der Übergang von der in den Figuren 1 und 2 dargestellten TransportKonfiguration in die in den Figuren 3 und 4 dargestellten Rücktransportkonfiguration erfolgt dabei derart, dass das Transportfahrzeug 1 mittels eines Krans oder einer ähnlichen Hebevorrichtung angehoben wird. Hierzu weist das Transportfahrzeug 1 an und für sich bekannte und daher nicht näher beschriebene Mittel auf, mittels derer ein Kran oder ein sonstiges Hebemittel am mittleren Fahrgestellteil 10a angreifen und dieses hochheben kann.

Eine Anhebung des mittleren Fahrgestellteils 10a bewirkt, dass - wie in Figur 5 sowie in der Figur 6b dargestellt - die seitlichen Fahrgestellteile 10b und 10c um die durch die Gelenke 21, 21' festgelegten Achsen nach unten bewegt werden, bis sie schließlich ihre in der Figur 6d gezeigte Position einnehmen. Nachdem sie vorzugsweise durch nicht gezeigte Verriegelungsmittel gegen ein unbeabsichtigtes Auseinanderklappen gesichert wurden, kann dann das Transportfahrzeug 1 auf die Plattform eines entsprechenden Fahrzeugs gehoben und der Rücktransport kann stattfinden.

Wie aus der Figur 6d ersichtlich, bilden hier die äußeren Längsträger 12b und 12c eine Standfläche für das zusammengeklappte Transportfahrzeug 1 auf, welche es in vorteilhafter Art und Weise erlaubt, das Transportfahrzeug 1 in seiner Rückholkonfiguration auf der Ladefläche eines entsprechend ausgebildeten Rückholfahrzeugs zu positionieren.

Die Überführung des zusammengeklappten, sich also in seiner Rückholkonfiguration befindlichen Transportfahrzeugs 1 in seine Transportkonfiguration erfolgt dann in der umgekehrten Reihenfolge der Sequenz der Figuren 6a-6d. Das Transportfahrzeug 1 wird von einem Kran oder einer sonstigen Hebevorrichtung von der Ladefläche des Rückholfahrzeugs gehoben. Dann werden die seitlichen Fahrgestellteile 10b und 10c in Querrichtung auseinandergezogen und das mittlere Fahrgestellteil 10a wird weiter abgesenkt, bis schließlich das Transportfahrzeug 1 seine in Figur 6a gezeigte Transportkonfiguration besitzt.

Im hier gezeigten Fall ist das Transportfahrzeug 1 in seiner Breite und Spurweite veränderbar ausgebildet. Hierzu ist vorgesehen, dass die Querträgersegmente 20b, 20b' und 20c, 20c' sowie die weiteren Querträger 22b-24b sowie 22c-24c teleskopierbar ausgebildet sind, so dass durch eine entsprechende Längenveränderung der seitlichen Querträgersegmente 20b, 20b', 20c, 20c' sowie der weiteren Querträger 22b-24b sowie 22c-24c die Breite und die Spurweite der Fahrgestellteile 10b und 10c und somit die Breite des Transportfahrzeugs 1 veränderbar ist. Eine derartige Veränderbarkeit der Breite und der Spurweite des Transportfahrzeugs 1 ist zwar vorteilhaft, aber nicht zwingend erforderlich. Es kann auch vorgesehen sein, dass die seitlichen Fahrgestellteile 10b und 10c eine fest vorgegebene Breite aufweisen, so dass dann eine Teleskopierbarkeit der seitlichen Querträgersegmente 20b, 20b', 20c, 20c' sowie der weiteren Querträger 22b-24b sowie 22c-24c nicht erforderlich ist.

Jedes der beiden seitlichen Fahrgestellteile 10b und 10c weist eine Anzahl von Radanordnungen 13a-13d bzw. 14a-14d auf, welche vorzugsweise als Pendelachsen ausgebildet sind und des Weiteren vorzugsweise eine hydraulische Aufhängung besitzen. Die Ausbildung derartiger Radanordnungen ist bekannt und muss daher nicht mehr näher beschrieben werden. Im hier gezeigten Fall sind die Radanordnungen 13a-13d und 14a-14d als Radachsen ausgebildet, die jeweils am seitlichen Längsträger 11b bzw. 11c angeordnet sind und jeweils zwei Doppelräder 15 besitzen. Es ist aber auch möglich, dass die Radanordnungen 13a-13d bzw. 14a-14d anstelle von Achslinien jeweils eine Einzelradaufhängung besitzen. Das zwischen den beiden seitlichen Fahrgestellteilen 10b und 10c angeordnete mittlere Fahrgestellteil 10a besitzt - wie aus den Figuren ersichtlich - keine derartigen Radanordnungen, ist also diesbezüglich "radlos". Es wird bevorzugt, dass die Radanordnungen 13a-13d bzw. 14a-14d, zumindest teilweise, als Lenkachsen ausgebildet sind. Auch dies ist bekannt und muss daher nicht mehr näher erläutert werden.

Die Ausbildung der Schwenkverbindung zwischen dem mittleren Fahrgestellteil 10a und den seitlichen Fahrgestellteilen 10b bzw. 10c wird exemplarisch anhand der Figur 7 beschrieben, welche ausschnittsweise eine Draufsicht auf den entsprechenden Endbereich des Transportfahrzeugs 1 zeigt. Man erkennt das Ende des zentralen Längsträgers 11a, das linke Ende des mit diesem verbundenen zentralen Querträgersegments 20a, das Gelenk 21 und den inneren Endbereich des seitlichen Querträgersegments 20b des Querträgers 20, welches über das Gelenk 21 mit dem Ende des zentralen Querträgersegments 20a verbunden ist. Dieser weist ein erstes Verriegelungselement 26 mit einer Durchtrittsbohrung 26a für einen Gelenkbolzen 27 auf. Das Querträgersegment 20b weist ein komplementär zum ersten Verriegelungselement 26 ausgebildetes zweites Verriegelungselement 28 auf, das zwischen den Lamellen des ersten Verriegelungselements 26 einschiebbar ist. Wird der Gelenkbolzen 27 durch die fluchtenden Öffnungen der beiden Verriegelungselemente 26, 28 durchgeführt, wird eine stabile Arretierung der Schwenkverbindung ausgebildet.

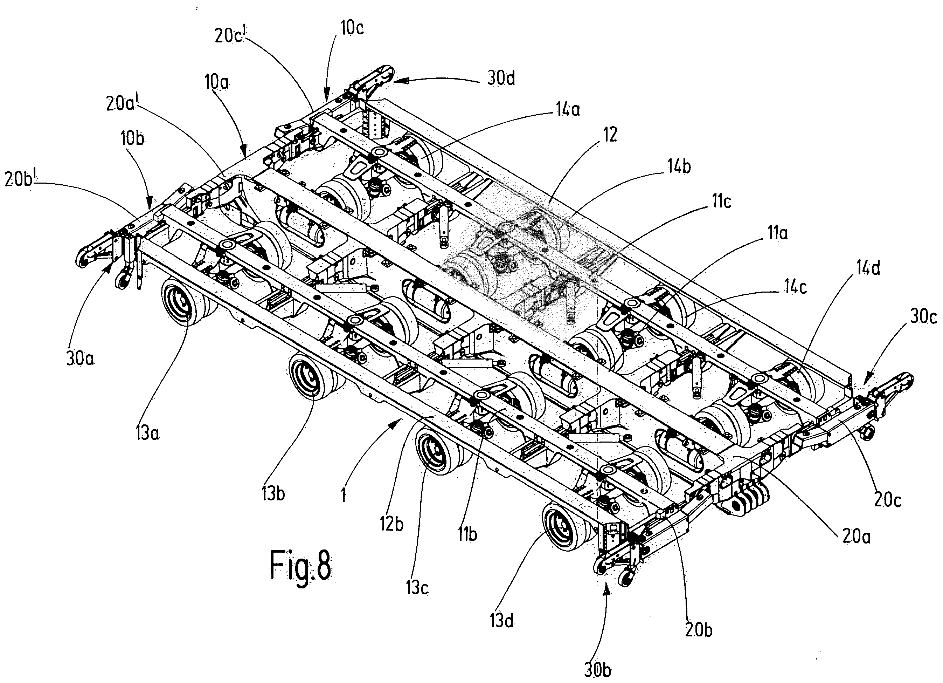

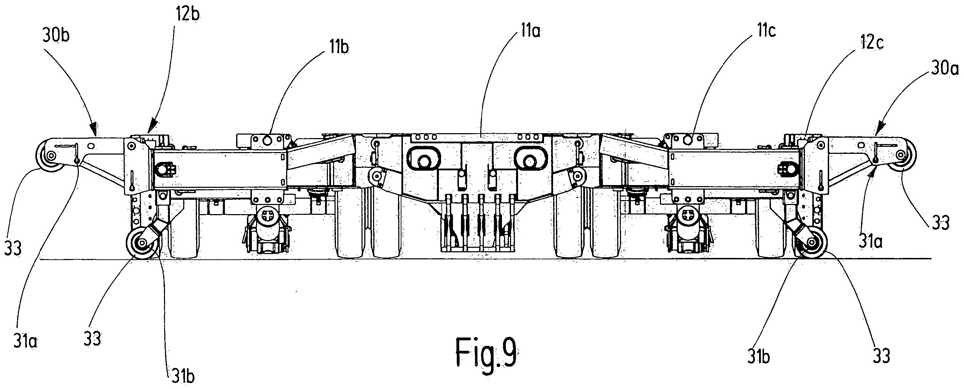

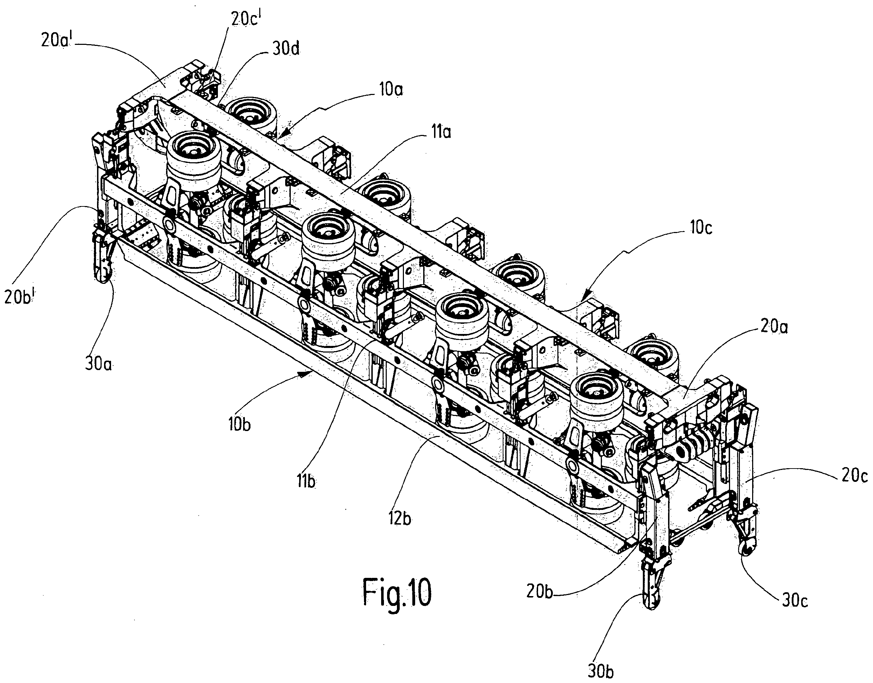

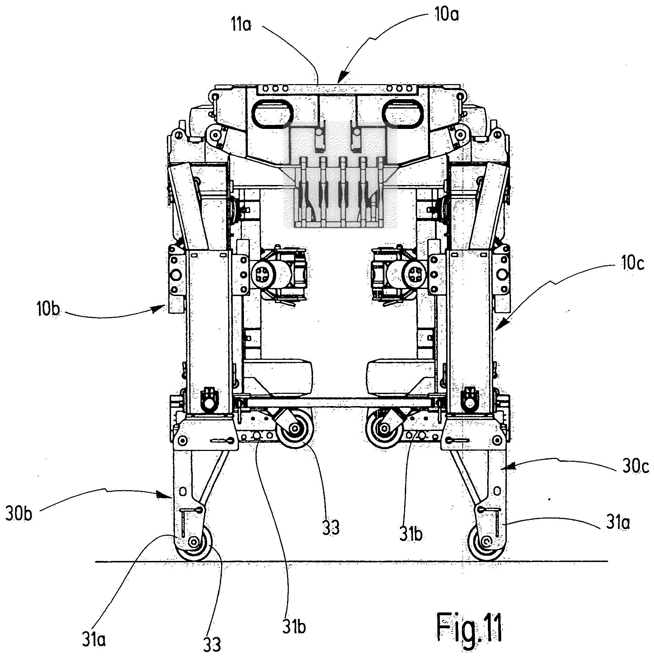

In den Figuren 8 bis 14 ist ein zweites Ausführungsbeispiel eines Transportfahrzeugs 1 dargestellt, welches seinem Grundaufbau nach demjenigen des ersten Ausführungsbeispiels entspricht. Einander entsprechende Bauteile werden daher mit gleichen Bezugszeichen versehen und nicht mehr näher beschrieben.

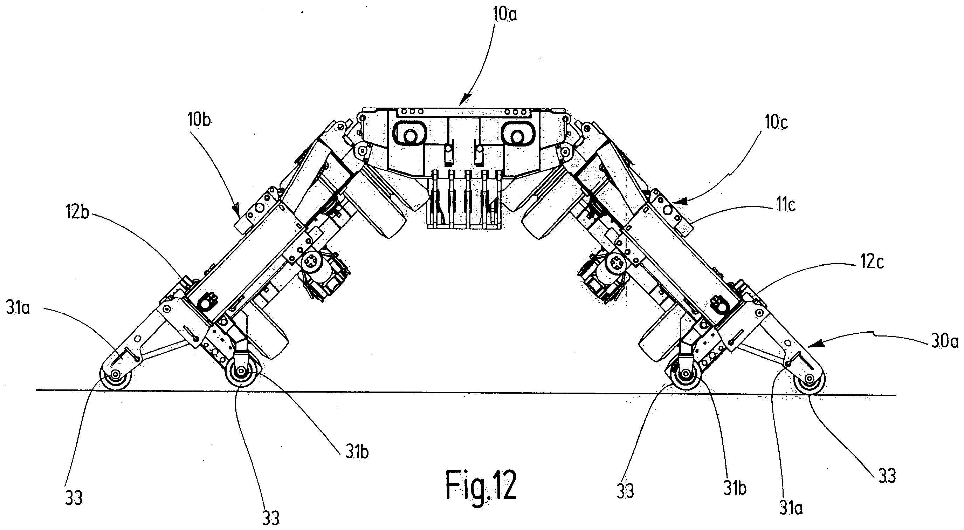

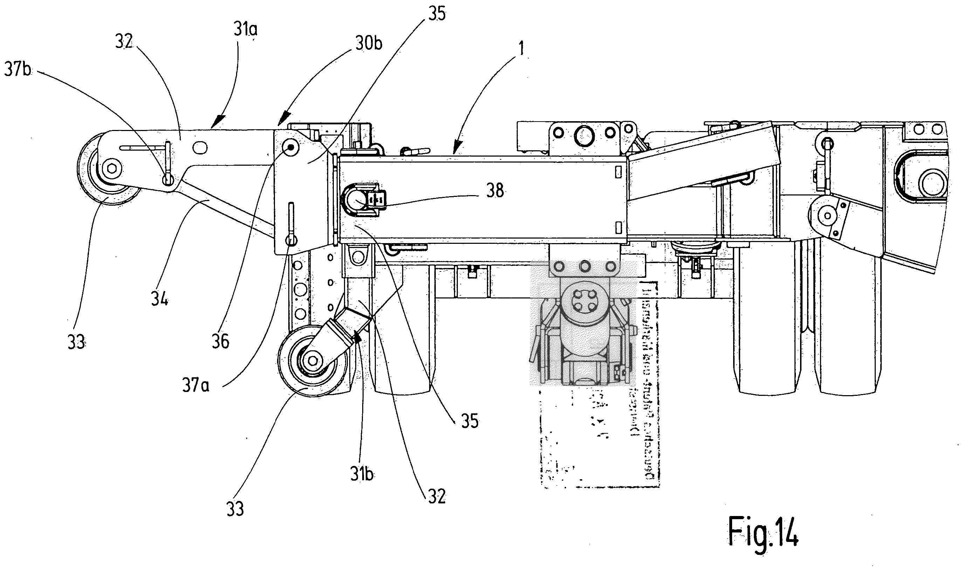

Der wesentliche Unterschied zwischen den beiden Ausführungsbeispielen besteht darin, dass das Transportfahrzeug 1 gemäß dem zweiten Ausführungsbeispiel eine Anzahl von Abstützanordnungen 30a-30d besitzt, welche dazu dienen, den Übergang des Transportfahrzeugs 1 zwischen seiner Transportkonfiguration und seiner Rückholkonfiguration sowie auch umgekehrt zu erleichtern. Die Abstützanordnungen 30a und 30b sind am äußeren Längsträger 12b und die Abstützanordnungen 30c und 30d am zweiten äußeren Längsträger 12c angeordnet. Der Aufbau der Abstützanordnung 30b wird anhand der Figur 14 beschrieben, die anderen Abstützanordnungen 30a, 30c, 30d sind vorzugsweise wie die Abstützanordnung 30a aufgebaut. Jede Abstützanordnung 30a-30d weist eine erste Abstützeinheit 31a auf, die einen Arm 32 besitzt, der mit seinem ersten Ende mit dem jeweiligen äußeren Längsträger 12b bzw. 12c verbunden ist. An seinem zweiten Ende trägt der Arm 32 eine Rolle 33. Hierzu ist anzumerken, dass die Verwendung einer Rolle 33 zwar bevorzugt, aber nicht zwingend erforderlich ist. Wie aus der nachstehenden Beschreibung des Klappvorgangs der beiden seitlichen Fahrgestellteile 10b und 10c um das mittlere Fahrgestellteil 10a ersichtlich, kann anstelle der Rollen 33 auch ein Gleitelement oder dergleichen eingesetzt werden. Ein Stützelement 34 verbindet jeweils den Arm 32 der ersten Abstützeinheit 31a mit dem äußeren Längsträger 12a bzw. 12b. Vorzugsweise ist vorgesehen, dass die erste Abstützeinheit 31a der Abstützanordnung 30a abnehmbar am Transportfahrzeug 1 befestigt ist. Eine derartige Maßnahme besitzt den Vorteil, dass die Abstützanordnung 30a sowie die weiteren Abstützanordnungen 30b-30d nicht permanent am Transportfahrzeug 1 befestigt sein müssen, sondern nur dann an diesem angebracht werden können, wenn dies erforderlich ist, nämlich zum Zusammenklappen und Aufklappen der seitlichen Fahrgestellteile 10b und 10c. Hierzu wird bevorzugt, dass am äußeren Längsträger 12b bzw. 12c eine Aufnahme 35 vorgesehen ist, in welche der Arm 32 der ersten Abstützeinheit 31a eingesetzt und dort mittels eines Verriegelungselements 36, z. B. eines Bolzens, fixiert wird. Bevorzugt wird, dass auch das Stützelement 34 - wie in Figur 12 dargestellt - mit seinem ersten Ende an der Aufnahme 35 und mit seinem zweiten Ende am Arm 32 angreift, wobei die Befestigung dieses abnehmbaren Stützelements 34 durch zwei Verriegelungselemente 37a und 37b erfolgt.

Die Abstützanordnung 30 weist vorzugsweise eine zweite Abstützeinheit 31b auf, welche ebenfalls einen Arm 32 besitzt, der mit seinem ersten Ende am äußeren Längsträger 12a bzw. 12b angreift und mit seinem zweiten Ende eine Rolle 33 oder ein Gleitelement trägt. Auch diese zweite Abstützeinheit 31b ist vorzugsweise abnehmbar ausgebildet. Hierzu wird der Arm 32 der zweiten Abstützeinheit 31b in eine weitere Aufnahme 35' des Transportfahrzeugs 1 eingesetzt und dort mittels eines Verriegelungselements 38 verriegelt.

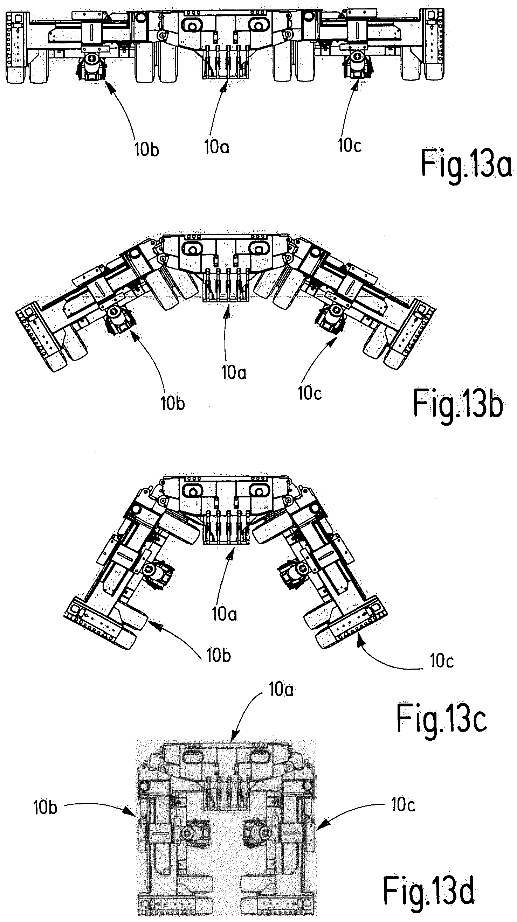

Der Verschwenkvorgang der beiden seitlichen Fahrgestellteile 10b, 10c um das mittlere Fahrgestellteil 10a wird anhand der Abfolge der Figuren 13a-13d beschrieben: Die Figur 13a zeigt das Transportfahrzeug 1 in seiner Transportkonfiguration, wobei aber bereits die ersten Abstützanordnungen 30a-30d am Transportfahrzeug 1 angebracht wurden. Die ersten Abstützeinheiten 31a der Abstützanordnungen 30a-30d stehen seitlich vom Transportfahrzeug 1 ab, wobei bevorzugt wird, dass diese ersten Abstützeinheiten 31a im wesentlichen waagerecht angeordnet sind. Die zweiten Abstützeinheiten 31b der Abstützanordnungen 30a-30d wird vorzugsweise so angeordnet, dass ihre Rollen 33 auf dem das Transportfahrzeug 1 tragenden Untergrund aufsetzen, sie sind also im wesentlichen vorzugsweise vertikal angeordnet.

Wird nun das mittlere Fahrgestellteil 10a mittels eines Krans oder einer ähnlichen Hebevorrichtung angehoben, so verschwenken die beiden seitlichen Fahrgestellteile 10b und 10c entsprechend der Anhebung des mittleren Fahrgestellteils 10a nach unten, wobei die beiden seitlichen Fahrgestellteile 10b und 10c auf den Rollen 33 der zweiten Abstützeinheit 31b der Abstützanordnungen 30a-30d abrollen (Figur 13b). Ein weiteres Anheben des mittleren Fahrwerkteils 10a bewirkt, dass dann die Rollen 33 der ersten Abstützeinheiten 31a der Abstützanordnungen 30 auf dem das Transportfahrzeug 1 tragenden Untergrund aufsetzen. Die Rollen 33 der zweiten Abstützeinheiten 31b heben dann vom Untergrund ab und die beiden seitlichen Fahrgestellteile 10b, 10c rollen dann auf den Rollen 33 der ersten Abstützeinheiten 31a der Abstützanordnungen 30 ab.

Wie aus Figur 13c ersichtlich, werden die beiden seitlichen Fahrgestellteile 10b und 10c zum Schluß des Anhebevorgangs des mittleren Fahrgestellteils 10a von den Rollen 33 der ersten Abstützeinheiten 31a der Abstützanordnungen 30a-30d abgestützt.

Dann werden die ersten Abstützeinheiten 31a der Abstützanordnungen 30 eingeklappt, bis sie ihre in Figur 13d gezeigte Stellung erreichen. Das zusammengeklappte Transportfahrzeug 1 ist dann für seinen Rücktransport bereit.

Zusammenfassend ist festzuhalten, dass durch die beschriebenen Maßnahmen in vorteilhafter Art und Weise ein Transportfahrzeug 1 ausgebildet wird, dessen Breite sich in einfacher Art und Weise dadurch verringern lässt, dass zumindest eines und bevorzugt beide seiner seitlichen Fahrgestellteile 10b, 10c um jeweils eine Gelenkachse gegenüber dem mittleren Fahrgestellteil 10a verschwenkt werden, dass also hier die beiden seitlichen Fahrgestellteile 10b und 10c um die entsprechenden Gelenkachsen geklappt werden, so dass diese dann im Rücktransport-Modus des Transportfahrzeugs 1 vorzugsweise innerhalb der durch die Breite des mittleren Fahrzeugteils 10a festgelegte Breite liegen. Das Transportfahrzeug 1 kann somit in einfacher Art und Weise auf ein Plattformfahrzeug geladen und in diesem Zustand zum Ausgangspunkt oder zu seinem weiteren Einsatzort transportiert werden.

Die optional vorsehbaren Abstützanordnungen 30a-30d erleichtern hier den Übergang zwischen der Transportkonfiguration und der Rückholkonfiguration (und umgekehrt), da hierbei die seitlichen Fahrgestellteile 10b und 10c auf Rollen 33 der Abstützanordnungen 30a-30d abrollen können.

## Patentansprüche

1. Schwerlast-Transportfahrzeug mit einer variablen Breite, mit einem Fahrgestell (10), welches zwei Fahrgestellteile (10b, 10c) aufweist, die jeweils eine Anzahl von hintereinander angeordneten Radanordnungen (13a-13d; 14a-14d) tragen, wobei die beiden Fahrgestellteile (10b, 10c) eine Transportplattform für die zu transportierende Schwerlast festlegen, **dadurch gekennzeichnet, dass** das Transportfahrzeug (1) ein zwischen diesen beiden seitlichen Fahrgestellteilen (10b, 10c) angeordnetes, radloses mittleres Fahrgestellteil (10a) aufweist, und dass zumindest ein seitliches Fahrgestellteil (10b, 10c) um eine Schwenkachse, die in Längsrichtung des Transportfahrzeugs verläuft, gegenüber dem mittleren Fahrgestellteil (10a) verschwenkbar ist.

2. Schwerlast-Transportfahrzeug nach Anspruch 1, **dadurch gekennzeichnet, dass** beide seitlichen Fahrgestellteile (10b, 10c) um jeweils eine Schwenkachse gegenüber dem mittleren Fahrgestellteile (10a) verschwenkbar sind.

3. Schwerlast-Transportfahrzeug nach einem der vorangehenden Ansprüche, **dadurch gekennzeichnet, dass** das mittlere Fahrgestellteil (10a) mindestens ein mittleres Querträgersegment (20a; 20a') eines Querträgers (20; 20') besitzt, welches mit mindestens einem seitlichen Querträgersegment (20b; 20b' bzw. 20c; 20c') dieses Querträgers (20; 20')verbunden ist.

4. Schwerlast-Transportfahrzeug nach einem der vorangehenden Ansprüche, **dadurch gekennzeichnet, dass** mindestens ein seitliches Fahrgestellteil (10b, 10c) mindestens einen Querträger (22b-24b; 22c-24c) besitzt, welcher gelenkig mit dem mittleren Fahrgestellteil (10a) verbunden ist.

5. Schwerfast-Transportfahrzeug nach den Ansprüchen 3 und 4, **dadurch gekennzeichnet, dass** das mittlere Fahrgestellteil (10a) einen Längsträger (11a) besitzt, der mit dem mittleren Querträgersegment (20a; 20d) des oder der Querträger (20; 20') des Transportfahrzeugs (1) verbunden ist, und dass mindestens ein seitliches Fahrgestellteil (10b; 10c) mindestens einen seitlichen Längsträger (11b; 11c) besitzt, der mit mindestens einem seitlichen Querträgersegment (20a; 20a' bzw. 20b; 20b') verbunden ist, und dass das oder die mittleren Querträgersegmente (20a; 20d) über jeweils ein Gelenk (21) mit dem seitlichen Querträgersegment (20a; 20a' bzw. 20b; 20b') verbunden ist.

6. Schwerlast-Transportfahrzeug nach einem der vorangehenden Ansprüche, **dadurch gekennzeichnet, dass** an mindestens einem seitlichen Längsträger (11b; 11c) mindestens eines seitlichen Fahrgesfiellteils (10b; 10c) der oder mindestens einer der Querträger (22b-24b; 22c-24c) des seitlichen Fahrgestellteils (10b, 10c) angeordnet und mit dem mittleren Fahrgestellteils (10a) über ein Gelenk (21') verbunden ist.

7. Schwerlast-Transportfahrzeug nach einem der vorangehenden Ansprüche, **dadurch gekennzeichnet, dass** mindestens ein seitliches Fahrgestellteil (10b; 10c) in seiner Breite veränderbar ausgebildet ist.

8. Schwerlast-Transportfahrzeug nach einem der vorangehenden Ansprüche, **dadurch gekennzeichnet, dass** mindestens ein seitliches Fahrgestellteil (10b; 10c) mindestens einen äußeren Längsträger (12b; 12c) besitzt.

9. Schwerlast-Transportfahrzeug nach einem der vorangehenden Ansprüche, **dadurch gekennzeichnet, dass** das Transportfahrzeug (1) mindestens eine Abstützanordnung (30a-30d) besitzt, welche mindestens eine vom Transportfahrzeug (1) abstehende Abstützeinheit (31a; 31b) besitzt.

10. Schwerlast-Transportfahrzeug nach Anspruch 9, **dadurch gekennzeichnet, dass** mindestens eine Abstützanordnung (30a-30d) mindestens zwei Abstützeinheiten (31a, 31b) besitzt.

11. Schwerlast-Transportfahrzeug nach Anspruch 9 oder 10, **dadurch gekennzeichnet, dass** mindestens eine Abstützeinheit (31a, 31b) einen Arm (32), der mit seinem einen Ende am Transportfahrzeug (1) befestigt oder befestigbar ist, aufweist, und dass der Arm (32) an seinem anderen Ende eine Rolle (33) oder ein Gleitelement besitzt.

## Claims

1. Heavy load transport vehicle with a variable width, comprising a chassis (10) having two chassis parts (10b, 10c), each carrying a number of successively arranged wheel assemblies (13a-13d; 14a-14d), the two chassis parts (10b, 10c) defining a transport platform for the heavy load to be transported, characterized in thatthe transport vehicle (1) comprises a wheelless central chassis part(10a) being arranged between the two lateral chassis parts (10b, 10c), and that at least one lateral chassis part (10b, 10c) can be pivoted about a pivot axis, which runs in the longitudinal direction of the transport vehicle, relative to the central chassis part(10a).

2. Heavy load transport vehicle according to claim 1, characterized in thatthe two lateral chassis parts (10b, 10c) are pivotably around a pivot axis in respect to the central chassis part (10a).

3. Heavy load transport vehicle according to one of the previous claims, characterized in thatthe central chassis part(10a) comprises at least one central cross member segment (20a; 20a') of a cross member (20; 20'), which is connected with at least one lateral cross member segment (20b; 20b' and 20c; 20c' respectively) of said cross member (20; 20').

4. Heavy load transport vehicle according to one of the previous claims, **characterized in that** at least one lateral chassis part (10b, 10c) comprises at least one further cross member (22b-24b; 22c-24c), which is pivotably connected with the central chassis part (10a).

5. Heavy load transport vehicle according to one of the previous claims, characterized in thatthe central chassis part(10a) has got a longitudinal carrier (11a), which is connected with the central cross member segment (20a; 20d) of the one or of the cross members (20; 20') of the transport vehicle (1), and that at least one lateral chassis part(10b; 10c) comprises at least one lateral longitudinal carrier (11b; 11c), which is connected with at least one lateral cross membersegment(20a; 20a' and 20b; 20b' respectively), and thatthe one or the central cross member segments (20a; 20d) are connected via a hinge (21) with the lateral cross member segment (20a; 20a' and 20b; 20b' respectively).

6. Heavy load transport vehicle according to one of the previous claims, **characterized in that** on at least one lateral longitudinal carrier (11b; 11c) of at least one lateral chassis part(10b; 10c) the one or at least one of the cross members (22b-24b; 22c-24c) of the lateral chassis part (10a; 10c) is arranged and is or are connected with the central chassis part (10a) via a hinge (21').

7. Heavy load transport vehicle according to one of the previous claims, **characterized in that** at least one lateral chassis part (10b; 10c) is designed changeable in its width.

8. Heavy load transport vehicle according to one of the previous claims, **characterized in that** at least one lateral chassis part (10b; 10c) comprises an outer longitudinal carrier (12b; 12c).

9. Heavy load transport vehicle according to one of the previous claims, characterized in thatthe transport vehicle (1) has got at least one support assembly (30a-30d), which has got at least one support unit (31a; 31b) protruding from the transport vehicle.

10. Heavy load transport vehicle according to claim 9, **characterized in that** at least one support assembly (30a-30d) has got at least two support units (31a, 31b).

11. Heavy load transport vehicle according to claim 9 or 10, **characterized in that** at least one support unit (31a, 31b) has got an arm (32), which is connected or can be connected with its first end with the transport vehicle (1), and that the arm (32) has got on its other end a roll (33) or a sliding element.

## Revendications

1. Véhicule de transport de charges lourdes avec une largeur variable, avec un train de roulement (10), qui présente deux parties de train de roulement (10b, 10c), qui supportent respectivement un nombre donné d'ensembles de roues (13a - 13d ; 14a - 14d) disposés les uns derrière les autres, dans lequel les deux parties de train de roulement (10b, 10c) définissent une plate-forme de transport pour la charge lourde à transporter, **caractérisé en ce que** le véhicule de transport (1) présente une partie de train de roulement centrale (10a) sans roue disposée entre lesdites deux parties de train de roulement (10b, 10c) latérales, et qu'au moins une partie de train de roulement (10b, 10c) latérale peut pivoter par rapport à la partie de train de roulement centrale (10a) autour d'un axe de pivotement, qui s'étend dans le sens de la longueur du véhicule de transport.

2. Véhicule de transport de charges lourdes selon la revendication 1, **caractérisé en ce que** les deux parties de train de roulement (10b, 10c) latérales peuvent être pivotées par rapport à la partie de train de roulement centrale (10a) autour de respectivement un axe de pivotement.

3. Véhicule de transport de charges lourdes selon l'une quelconque des revendications précédentes, **caractérisé en ce que** la partie de train de roulement centrale (10a) possède au moins un segment de traverse (20a ; 20a') central d'une traverse (20 ; 20'), lequel est relié à au moins un segment de traverse (20b ; 20b' ou 20c ; 20c') latéral de ladite traverse (20 ; 20').

4. Véhicule de transport de charges lourdes selon l'une quelconque des revendications précédentes, **caractérisé en ce qu'**au moins une partie de train de roulement (10b, 10c) latérale possède au moins une traverse (22b - 24b ; 22c - 24c), qui est reliée de manière articulée à la partie de train de roulement centrale (10a).

5. Véhicule de transport de charges lourdes selon les revendications 3 et 4, **caractérisé en ce que** la partie de train de roulement centrale (10a) possède un longeron (11a), qui est relié au segment de traverse (20a ; 20d) central de la ou des traverses (20 ; 20') du véhicule de transport (1), et qu'au moins une partie de train de roulement (10b ; 10c) latérale possède au moins un longeron (11b ; 11c) latéral, qui est relié à au moins un segment de traverse (20a ; 20a' ou 20b ; 20b') latéral, et que le ou les segments de traverse (20a ; 20d) centraux sont reliés au segment de traverse (20a ; 20a' ou 20b ; 20b') latéral par l'intermédiaire de respectivement une articulation (21).

6. Véhicule de transport de charges lourdes selon l'une quelconque des revendications précédentes, **caractérisé en ce que** la traverse ou au moins une des traverses (22b - 24b ; 22c - 24c) de la partie de train de roulement (10b, 10c) latérale est disposée au niveau d'au moins un longeron (11b ; 11c) latéral d'au moins une partie de train de roulement (10b ; 10c) latérale et est reliée à la partie de train de roulement centrale (10a) par l'intermédiaire d'une articulation (21').

7. Véhicule de transport de charges lourdes selon l'une quelconque des revendications précédentes, **caractérisé en ce qu'**au moins une partie de train de roulement (10b ; 10c) latérale est réalisée avec une largeur variable.

8. Véhicule de transport de charges lourdes selon l'une quelconque des revendications précédentes, **caractérisé en ce qu'**au moins une partie de train de roulement (10b ; 10c) latérale possède au moins un longeron (12b ; 12c) extérieur.

9. Véhicule de transport de charges lourdes selon l'une quelconque des revendications précédentes, **caractérisé en ce que** le véhicule de transport (1) possède au moins un ensemble de support (30a - 30d), qui possède au moins une unité de support (31a ; 31b) dépassant du véhicule de transport (1).

10. Véhicule de transport de charges lourdes selon la revendication 9, **caractérisé en ce qu'**au moins un ensemble de support (30a - 30d) possède au moins deux unités de support (31a, 31b).

11. Véhicule de transport de charges lourdes selon la revendication 9 ou 10, **caractérisé en ce qu'**au moins une unité de support (31a, 31b) présente un bras (32), qui est fixé ou peut être fixé par une de ses extrémités au niveau du véhicule de transport (1), et que le bras (32) possède au niveau de son autre extrémité une roulette (33) ou un élément coulissant.
